# DEMANDE DE BREVET EUROPEEN

(11) **EP 1 800 963 A1**
(43) Date de publication de la demande: **27.06.2007**
(21) Numéro de dépôt: 06126483.4
(22) Date de dépôt: 19.12.2006
(51) Int. Cl.: B60R 19/52

(54) **Procédé de fixation d'une pièce raportée sur une peau de véhicule automobile**

(30) Priorité: 22.12.2005 FR 0554029
(71) Demandeur: Peugeot Citroen Automobiles SA, 78943 Vélizy-Villacoublay Cedex (FR)
(72) Inventeur: Chuffart, Frédéric, 95530, LA FRETTE SUR SEINE (FR); Dumur, Denis, 78990, ELANCOURT (FR)

(57) **Abrégé**

L'invention se rapporte à un procédé de fixation d'une pièce rapportée (10) sur une peau (20) de véhicule automobile.

Selon l'invention, il comporte:
- une étape d'accostage de la pièce rapportée (10) sur la face extérieure (20a) de la peau (20),
- une étape de positionnement de la pièce rapportée (10) en utilisant la géométrie de la face intérieure (20b) de la peau (20),
- une étape de fixation de la pièce rapportée (10) sur la peau (20).

## Description

L'invention se rapporte à un procédé de fixation d'une pièce rapportée sur une peau de véhicule automobile.

Il est connu de fixer des pièces décoratives sur une peau de pare-chocs, par exemple, par encliquetage de pattes élastiques ménagées sur les pièces décoratives, dans des orifices de la peau.

Cependant, ce procédé de fixation n'assure pas un positionnement précis de la pièce décorative sur la peau de pare-chocs, ce qui nuit à l'aspect esthétique de la partie du véhicule sur laquelle est placée la pièce.

Un but de la présente invention est de pallier tout ou partie des inconvénients de l'art antérieur relevés ci-dessus.

A cette fin, le procédé de fixation selon l'invention, par ailleurs conforme à la définition générique qu'en donne le préambule ci-dessus, est essentiellement caractérisé en ce qu'il comporte :
- une étape d'accostage de la pièce rapportée sur la face extérieure de la peau,
- une étape de positionnement de la pièce rapportée en utilisant la géométrie de la face intérieure de la peau,
- une étape de fixation de la pièce rapportée sur la peau.

Par ailleurs, l'invention peut comporter l'une ou plusieurs des caractéristiques suivantes :
- au cours de l'étape d'accostage, on peut faire passer une nervure de la pièce rapportée dans un orifice prévu dans la peau,
- au cours de l'étape de positionnement, on peut placer des moyens de maintien en appui sur une première paroi intérieure de la peau formant un angle compris entre 60° et 150° avec la pièce rapportée, les moyens de maintien peuvent posséder un orifice destiné à accueillir une nervure de la pièce rapportée,
- au cours de l'étape de positionnement, les moyens de maintien peuvent coopérer également avec une deuxième paroi intérieure de la peau disposée sensiblement parallèlement à la pièce rapportée,
- les moyens de maintien utilisés au cours de l'étape de positionnement peuvent être positionnés de façon provisoire sur la face intérieure de la peau et peuvent être supprimés après l'étape de fixation.
- au cours de l'étape de fixation, une nervure, placée à distance des moyens de maintien, peut être soudée ou agrafée sur la face intérieure de la peau,
- les moyens de maintien utilisés au cours de l'étape de positionnement peuvent être positionnés de façon permanente sur la face intérieure de la peau et peuvent servir également à la fixation de la pièce rapportée,
- les moyens de maintien peuvent comporter une nervure ménagée au voisinage de l'orifice des moyens de maintien accueillant la nervure de la pièce rapportée,
- au cours de l'étape de fixation, on peut solidariser la nervure appartenant aux moyens de maintien avec la nervure de la pièce rapportée traversant l'orifice des moyens, par agrafage ou par soudage.

D'autres particularités et avantages apparaîtront à la lecture de la description ci-après faite en référence aux figures dans lesquelles :
- la figure 1 représente une vue en perspective d'une partie avant de véhicule automobile comportant un pare-chocs sur lequel est fixé une pièce rapportée selon le procédé de l'invention,
- la figure 2 est une vue en coupe selon les flèches ||-|| de la figure 1 , la pièce rapportée est fixée sur le pare-chocs selon un premier mode de réalisation,
- la figure 3 est une vue en coupe selon les flèches ||-|| de la figure 1 , la pièce rapportée est fixée sur le pare-chocs selon un deuxième mode de réalisation.

Dans la suite de la description, les faces intérieures et extérieures des différentes pièces s'entendent par leur orientation par rapport au véhicule. Ainsi, les faces intérieures sont orientées vers le véhicule, tandis que les faces extérieures leurs sont opposées.

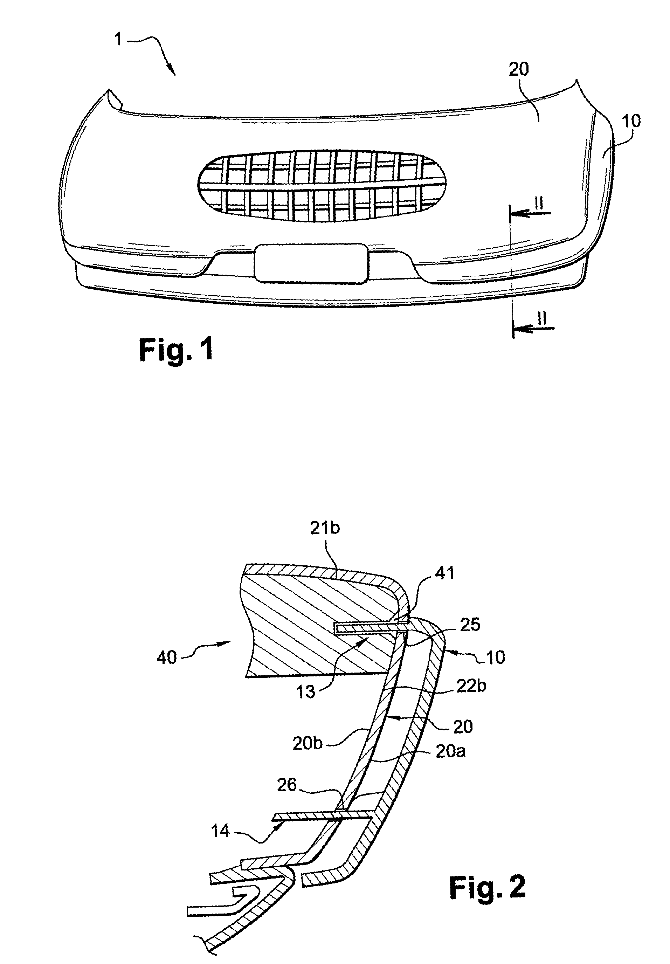

Une partie avant de véhicule, désignée par la référence 1 , est représentée sur la figure 1. Cette partie 1 comporte un enjoliveur 10 fixé sur la face extérieure 20a d'une peau de pare-chocs 20.

La face intérieure de l'enjoliveur 10 comporte des nervures 13, 14, venues de matière avec l'enjoliveur, destinées à coopérer avec des orifices 25, 26 prévus dans la peau 20 de pare-chocs. Ces orifices peuvent être réalisés, par exemple, par poinçonnage.

L'invention décrite, ci-après, concerne le procédé de fixation de l'enjoliveur 10 sur la peau de pare-chocs 20 ; dans la suite de la description, les deux modes de réalisation de l'invention seront distingués.

La figure 2 présente l'enjoliveur 10 fixé sur la peau 20 de pare-chocs selon le premier procédé de fixation. Ce mode comprend tout d'abord une étape d'accostage de l'enjoliveur 10 sur la face extérieure 20a de la peau 20, au cours de laquelle, les nervures 13, 14 de l'enjoliveur 10 traversent les orifices 25, 26 ménagés dans la peau 20 de pare-chocs.

Puis, l'enjoliveur 10 est positionné sur la peau 20 à l'aide d'un outil de maintien 40 destiné à venir en appui sur la face intérieure 20b de la peau, c'est cette étape qui est mise en évidence à la figure 2. Plus particulièrement, cet outil est en appui sur la face 22b disposée sensiblement parallèlement à l'enjoliveur 10 et sur la face 21b formant un angle compris entre 60° et 150° avec l'enjoliveur 10. De plus, l'outil de maintien 40 comporte un orifice 41 destiné à recevoir une nervure 13 de l'enjoliveur 10. Bien sûr, l'outil de maintien peut être adapté pour recevoir plusieurs nervures disposées à distance les unes des autres. De même, plusieurs outils de maintien peuvent être utilisés pour assurer le positionnement de l'enjoliveur.

Une fois correctement positionné, l'enjoliveur 10 peut alors être fixé sur la peau 20 de pare-chocs. Pour se faire, une nervure 14 placée à distance de l'outil de maintien 40 est soudée ou agrafée sur la face intérieure 20b de la peau. Bien sûr, cette opération est reproduite pour toutes les nervures ne recevant pas d'outils de maintien. Une fois l'étape de fixation réalisée, l'outil de maintien peut être ôté.

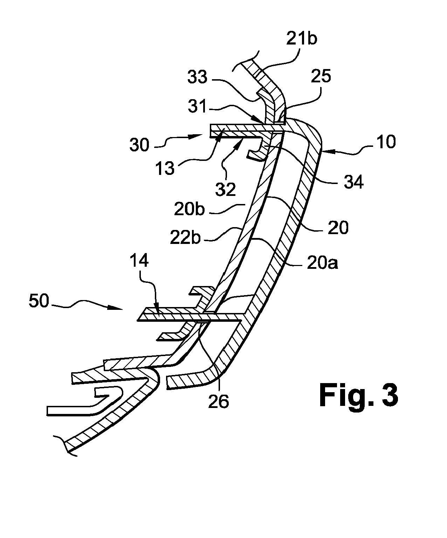

La figure 3 présente l'enjoliveur 10 fixé sur la peau 20 de pare-chocs selon le deuxième procédé de fixation. L'étape d'accostage précédemment décrite est identique pour ce second mode de réalisation.

L'étape de positionnement utilise d'autres moyens de maintien destinés à venir également en appui sur la face intérieure 20b de la peau. Dans ce second mode, on utilise un support 30 comprenant au moins deux parois 33, 34, l'une 34 est destinée à venir en appui sur la face 22b disposée sensiblement parallèlement à l'enjoliveur 10, l'autre 33 est destinée à venir en appui sur la face 21 b formant un angle compris entre 60° et 150° avec l'enjoliveur 10. La paroi 34 de ce support 30, disposée sensiblement parallèlement à l'enjoliveur 10, comporte un orifice 31 au voisinage duquel est ménagée une nervure 32 venue de matière avec le support. Ainsi lors de l'étape de positionnement, une nervure 13, appartenant à l'enjoliveur 10 et traversant déjà la peau de pare-chocs 20, traverse l'orifice 31 du support. Ainsi, la nervure 13 est disposée en saillie sur la face intérieure 20b de la peau de pare-chocs, à proximité de la nervure 32 du support ; c'est cette étape qui est mise en évidence à la figure 3.

Une fois correctement positionné, l'enjoliveur 10 peut alors être fixé sur la peau 20 de pare-chocs. Pour se faire, on solidarise les nervures entres elles par agrafage ou par soudage. Ainsi, le moyen de maintien 30 utilisé pour ce mode de réalisation permet également d'assurer la fixation de l'enjoliveur, ce moyen de maintien est donc positionné de façon définitive sur la peau de pare-chocs.

Bien sûr, le support peut être adapté pour recevoir plusieurs nervures de l'enjoliveur disposées à distance les unes des autres. Selon une autre variante, plusieurs supports destinés à recevoir une seule nervure peuvent être utilisés pour assurer correctement le positionnement de l'enjoliveur.

De même, le support peut ne pas être directement en appui sur la face 21 b de la peau de pare-chocs ; des calles indépendantes ou des nervures appartenant au support peuvent être disposées entre la paroi 33 du support et la face 21 b de la peau de pare-chocs.

Selon ce mode de réalisation, un autre support de nervure 50 peut être utilisé en complément du premier support décrit ci-dessus, ce second support est identique ou sensiblement identique au premier. Toutefois ce second support n'est pas utilisé pour l'étape de positionnement, mais seulement pour l'étape de fixation. Ainsi, ce second support est seulement en appui sur la face interne 22b de la peau 20 disposée sensiblement parallèlement à l'enjoliveur 10.

Ainsi, quelque soit le procédé de fixation utilisé, la position de l'enjoliveur 10 par rapport à la peau de pare-chocs 20 est parfaitement définie, ce qui garantie l'aspect esthétique de la partie avant du véhicule. Ceci est notamment dû au fait que le moyen de maintien est placé en appui sur la face interne 21b de la peau formant un angle compris entre 60° et 150° avec l'enjoliveur 10.

Le procédé de fixation de l'invention peut servir à fixer un enjoliveur sur une peau de pare-chocs arrière, mais également d'autres pièces décoratives sur la peau du véhicule.

## Revendications

1. Procédé de fixation d'une pièce rapportée (10) sur une peau (20) de véhicule automobile, **caractérisé en ce qu'**il comporte :
- une étape d'accostage de la pièce rapportée (10) sur la face extérieure (20a) de la peau (20),
- une étape de positionnement de la pièce rapportée (10) en utilisant la géométrie de la face intérieure (20b) de la peau (20),
- une étape de fixation de la pièce rapportée (10) sur la peau (20).

2. Procédé de fixation selon la revendication 1, **caractérisé en ce que**, au cours de l'étape d'accostage, on fait passer une nervure (13, 14) de ladite pièce rapportée (10) dans un orifice (25, 26) prévu dans ladite peau (20).

3. Procédé de fixation selon la revendication 2, **caractérisé en ce que**, au cours de l'étape de positionnement, on place des moyens de maintien (30, 40) en appui sur une première paroi intérieure (21b) de la peau (20) formant un angle compris entre 60° et 150° avec la pièce rapportée (10), lesdits moyens de maintien (30, 40) possédant un orifice (31, 41) destiné à accueillir une nervure (13) de ladite pièce rapportée (10).

4. Procédé de fixation selon la revendication 3, **caractérisé en ce que**, au cours de l'étape de positionnement, lesdits moyens de maintien (30, 40) coopèrent également avec une deuxième paroi intérieure (22b) de la peau (20) disposée sensiblement parallèlement à la pièce rapportée (10).

5. Procédé de fixation selon la revendication 3 ou 4, **caractérisé en ce que** les moyens de maintien (40) utilisés au cours de l'étape de positionnement sont positionnés de façon provisoire sur la face intérieure (20b) de la peau (20) et sont supprimés après l'étape de fixation.

6. Procédé de fixation selon la revendication 5, **caractérisé en ce que**, au cours de l'étape de fixation, une nervure (14), placée à distance des moyens de maintien (40), est soudée ou agrafée sur la face intérieure (20b) de la peau (20).

7. Procédé de fixation selon la revendication 3 ou 4, **caractérisé en ce que** les moyens de maintien (30) utilisés au cours de l'étape de positionnement sont positionnés de façon permanente sur la face intérieure (20b) de la peau (20) et servent également à la fixation de la pièce rapportée (10).

8. Procédé de fixation selon la revendication 7, **caractérisé en ce que** lesdits moyens de maintien (30) comportent une nervure (32) ménagée au voisinage de l'orifice (31) desdits moyens accueillant la nervure (13) de la pièce rapportée (10).

9. Procédé de fixation selon la revendication 8, **caractérisé en ce que**, au cours de l'étape de fixation, on solidarise la nervure (32) appartenant aux moyens de maintien (30) avec la nervure (13) de la pièce (10) rapportée traversant l'orifice (31) desdits moyens, par agrafage ou par soudage.
